# EUROPEAN PATENT SPECIFICATION

(11) **EP 0 254 877 B1**
(45) Date of publication and mention of the grant of the patent: **01.09.1993**
(21) Application number: 87109203.7
(22) Date of filing: 26.06.1987
(51) Int. Cl.: H04L 25/06, H04L 27/08

(54) **Automatic drift control circuit**
Schaltung zur automatischen Abweichungskontrolle
Circuit de contrôle automatique de dérive

(30) Priority: 27.06.1986 JP 149616/86
(43) Date of publication of application: 03.02.1988
(73) Proprietor: FUJITSU LIMITED, Kawasaki-shi, Kanagawa 211 (JP)
(72) Inventor: Iwamatsu, Takanori, Otawara-shi Tochigi 324 (JP)
(74) Representative: Lehn, Werner, Dipl.-Ing.

(56) References cited:
- EP-A- 0 120 416
- EP-A- 0 120 474
- EP-A- 0 153 708
- US-A- 4 250 458

## Description

The present invention relates to an automatic drift control circuit comprising: adding means for adding a drift control signal to a multi-level input signal; A/D converting means, operatively connected to said adding means, for converting said added multilevel signal into a corresponding digital signal including data bits and a further bit which is lower in significance by one place than the data bits; error signal selecting means, operatively connected to said A/D converting means and always producing an error signal; and integrating means, operatively connected to said error signal selecting means and adding means, for integrating said error signal and applying it to said adding means as said drift control signal.

Such a circuit is known from EP-A-0 120 474. Another related circuit is known from EP-A-0 153 708.

On the occasion of demodulating a received multilevel QAM (Quadrature Amplitude Modulation) signal with the recovered carrier and converting it to a digital signal by level decision of such demodulated output signal, if the demodulated output signal level deviates from the correct level, it can no longer be converted to correct digital signal and therefore it must be corrected automatically. For this purpose, an automatic drift control circuit is conventionally used.

The demodulated signal is amplified up to the specified level by an amplifier, then input to an A/D converter through an adder and then converted to a digital signal consisting of a plurality of bits. For example, where a 256-level QAM signal is demodulated and converted to a digital signal, the data of 4-bit structure can be obtained since the I and Q channels respectively become the data of 16-level. The bit of lower significance by one bit place than such data, namely the 5th bit from the most significant bit (MSB) indicates whether or not the input signal is higher or lower than a decision level among the specified 16 levels. Therefore, it is used as the error signal and it is applied to an integrator for integration. The integrated output therefrom is applied to said adder and thereby the drift of the demodulated signal is corrected.

Where drift of the demodulated multi-level signal to be input to the A/D converter is within the range of a decision level of the error signal, the drift can be corrected and a multi-level signal can be decided correctly. But, if the level variation of a received signal becomes large due to fading, etc. and thereby the drift of a multi-level signal becomes large and the demodulated signal exceeds the threshold level for data decision in the A/D converter, the polarity of the error signal is inverted, resulting in a pseudo pulling condition. Namely, the signal is pulled under the condition that the level of the multi-level signal is shifted upward or downward by the input level range of the A/D converter. In such pseudo pulling condition, correct data cannot be obtained.

It is an object of the present invention to realize automatic correction of drift by preventing such pseudo pulling condition explained previously.

According to the invention, the control circuit initially defined is characterised by: holding means for storing the value of said further bit when the signal level is in a specified range at least including a range higher than the highest decision level of said A/D converting means and a range lower than the lowest decision level thereof, said selecting means being operable in response to a decision condition signal to output said error signal on the basis of the current value of the further bit in a normal condition and on the basis of the stored value in an abnormal condition; and monitoring means, operatively connected to said A/D converting means and said error signal selecting means, for judging the decision condition on the basis of said digital signal and outputting said decision condition signal to said error signal selecting means.

The above and other objects and advantages of the present invention will be apparent to those skilled in the art, from following details of construction of the present invention and the drawings, in which:
Fig. 1 is a basic block diagram of the present invention;
Fig. 2 is a block diagram of an embodiment of the present invention;
Fig. 3 and Fig. 4 indicate decision of A/D converter;
Fig. 5 is a block diagram of another embodiment of the present invention.

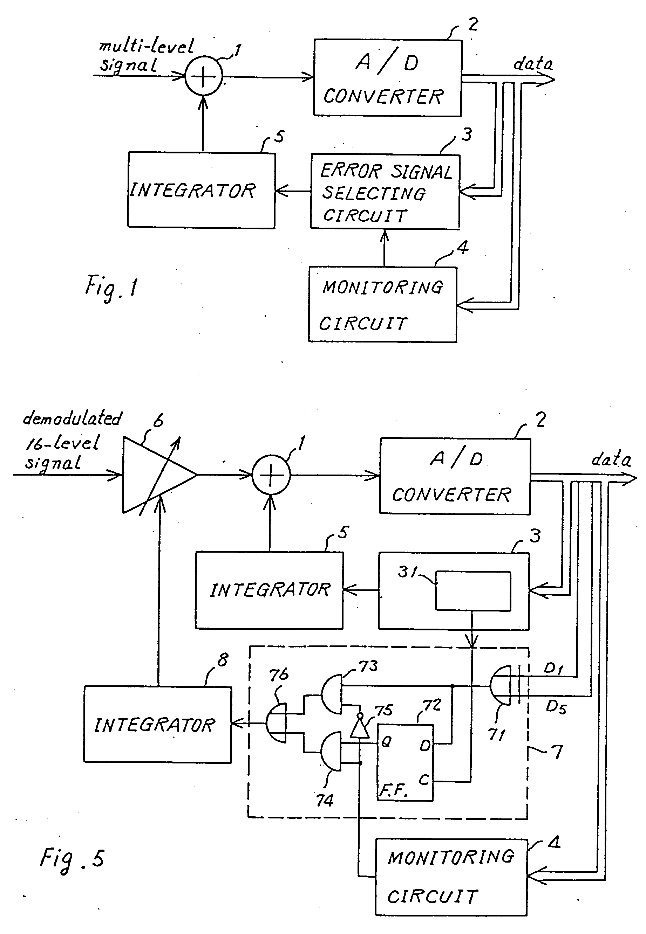

Fig. 1 is a basic block diagram of the present invention. In Fig. 1, a multi-level signal obtained, for example, by demodulating the QAM signal is input to the analog-to-digital (A/D) converter 2 through an adder 1. The A/D converter 2 converts the multi-level signal input into the digital signal corresponding to the level thereof and outputs it as the data and simultaneously outputs the specified bits including the bits lower in significance than the data to an error signal selecting circuit 3 and a monitoring circuit 4. The error signal selecting circuit 3 always outputs an error signal. Corresponding to the decision condition signal obtained from the monitoring circuit 4, the error signal for the normal condition or abnormal condition is derived from the output of the A/D converter 2. Namely, the error signal selecting circuit 3 selects and outputs the correct error signal under the normal or false condition. The integrator 5 integrates the error signal from the error signal selecting circuit 3 and outputs it to the adder 1 as the drift control signal. The adder 1 adds the integrated signal to multi-level signal so that drift of multi-level signal may be corrected.

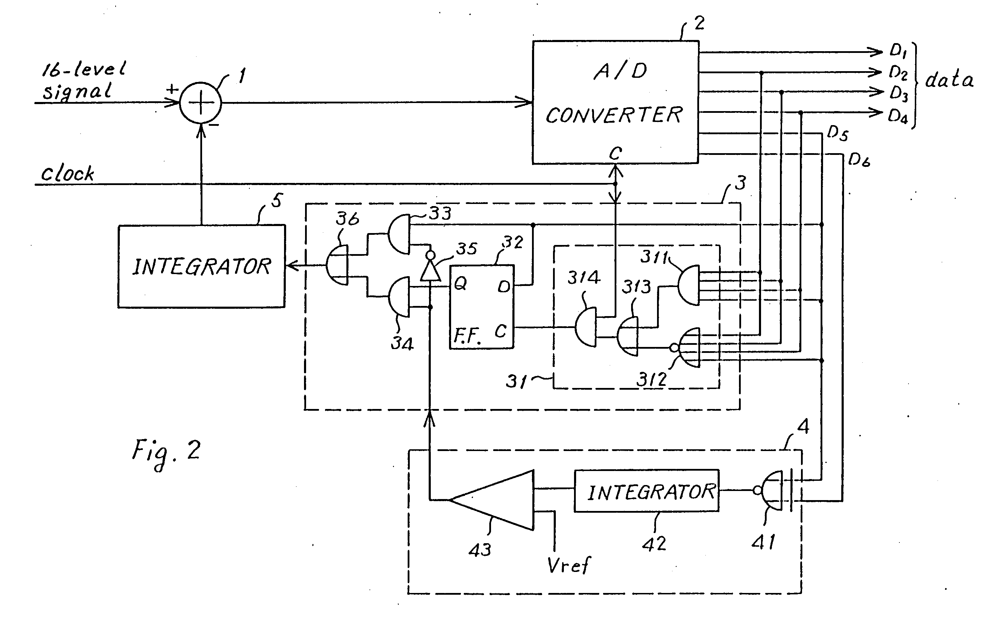

Fig. 2 is a block diagram of an embodiment which may be used for any of the 16-level signals of the I and Q channels obtained by demodulating the 256-level QAM signal.

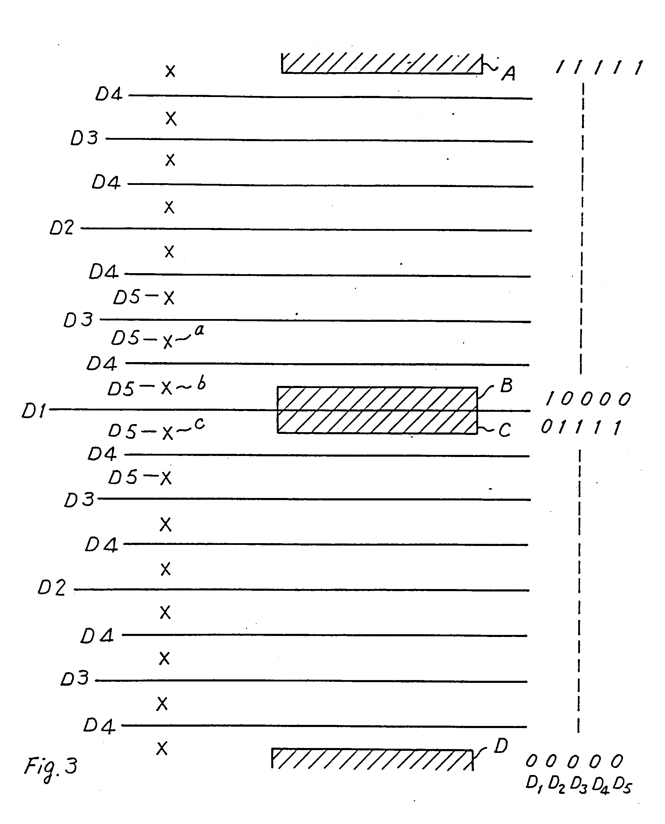

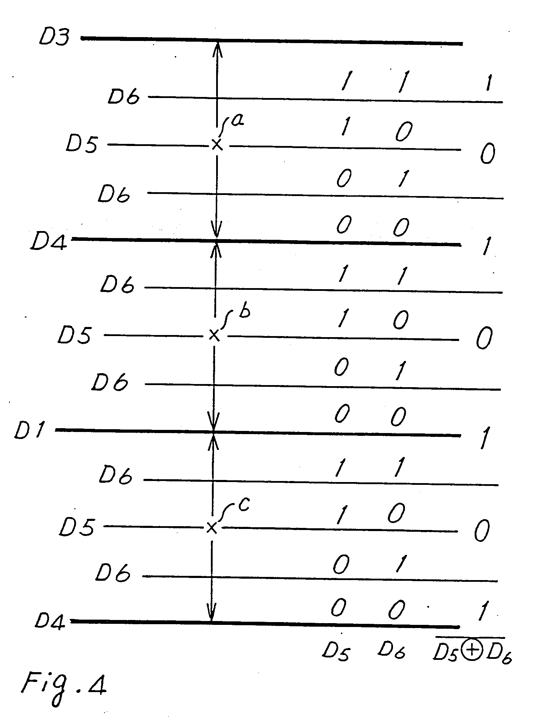

In Fig. 2, the 16-level signal is input to the A/D converter 2 through the adder 1. Fig. 3 and Fig. 4 indicate decisions of the A/D converter 2. The A/D converter 2 outputs the four data bits D₁-D₄ which indicate to which level among 16 levels indicated by X in Fig. 3 the input signal corresponds and also outputs, as shown in Fig. 4 two further bits D₅, D₆ of lower significance than the data, which further bits decide further detail of the range (a, b, c....), each level being discriminated into four ranges. In Fig. 3 and Fig. 4, the horizontal line indicates the threshold level of each bit.

For example, when the signal which should be decided as the level b is located between the level b and the threshold level of D₄ which is higher than the level b, the error signal bit D₅ becomes 1, allowing the judgement that positive drift is generated. However, if the signal exceeds the threshold level of D₄ and is located between such threshold level and the level a, the bit D₅ becomes 0, and an erroneous error signal which indicates negative drift is generated as output. However, when the signal is within the range A higher than the highest level among 16 levels and in the range D lower than the lowest level, there should be no signal at the outside of such levels. Accordingly a correct error signal can be obtained. Thereby even when the decision condition is not good, correct drift control can be realized by executing the drift control through the selection of the error signal obtained when the input signal to the A/D converter 2 is within such range.

However, if interval of respective levels of 16-level signal becomes smaller than the interval of decision level of the A/D converter 2 due to the reason that the gain of amplifier (not illustrated in Fig. 2) in the preceding stage is too small, the signal as a whole is concentrated to the center, the signal entering A or D of Fig. 3 is reduced and it becomes difficult to obtain the signal for control. Therefore, the error signal is preferably selected not only in the ranges A and D but also in the center ranges B and C.

The result of a decision condition can be judged as follows.

As indicated in Fig. 4, the range where the bits D₅ and D₆ take the same value, namely the exclusive NOR of D₅ and D₆ becomes 1 is far from the correct level. Therefore, the result of a decision condition can be judged from the fact that the rate of the input signal to enter such range is higher or lower than a certain reference value.

In Fig. 2, the logic circuit 31 consisting of an AND circuit 311, a NOR circuit 312, an OR circuit 313 and an AND circuit 314 outputs the pulse synchronized with the clock to the A/D converter when the input signal enters the range of A-D of Fig. 3.

The flip-flop 32 holds the error signal D₅ when such pulse is generated. The logic circuit consisting of the AND circuits 33, 34, inverter 35 and OR circuit 36 selects and outputs the error signal D₅ without passing the flip-flop 32 and the error signal having been held by the flip-flop 32, in accordance with the decision condition signal from the monitoring circuit 4. The circuits 31-36 correspond to the error signal selecting circuit 3 of Fig. 1.

In Fig. 2, the exlusive NOR 41 outputs the signal indicated by D₅ 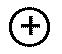 D₆ in Fig. 4 as the pseudo error signal and the integrator 42 integrates such pseudo error signal and outputs pseudo error rate. This pseudo error rate is compared with the reference value V_{ref} in the comparator 43. If it is lower than such reference value, decision condition is judged good but if it is higher than the reference value, decision condition is judged bad. The decision condition signal is then output to the error signal selecting circuit. The circuits 41 - 43 correspond to the monitoring circuit 4 of Fig. 1.

As described previously, when the decision condition of A/D converter 2 is good, an error signal is used even in case the input is in any range, but when the decision condition is bad, the error signal is selected and used for drift control. Thereby, the adequate control can be realized in accordance with the decision condition.

As the control using the error signal, the automatic gain control is also known in addition to the automatic drift control. In case the input signal is positive while the error signal is positive and the input signal is negative while the error signal is negative, the gain of the amplifier in the preceding stage of the A/D converter can be judged as too large and in case the polarity of the input signal is different from that of the error signal, such gain is judged as too small. Therefore, the gain of the amplifier can be controlled in accordance with an integrated value by integrating the exclusive OR of the first bit (D₁) which indicates the polarity among the outputs of the A/D converter and the error signal (D₅ in the case of 16-level signal) as the gain error signal. Even in the case of such automatic gain control, the gain error signal is selected and can be conrolled when the decision condition becomes bad as in the case of the drift control.

Fig. 5 is a block diagram of the second embodiment of the present invention. In Fig. 5, the adder 1, A/D converter 2, error signal selecting circuit 3, monitoring circuit 4 and integrator 5 are similar to those of Fig. 2. A variable gain amplifier 6 is provided at the preceding stage of the adder 1 and the output level is controlled to the constant value by the gain control signal described later. D₁ and D₅ among the outputs of A/D converter 2 are input to a gain error signal selecting circuit 7. In the gain error signal selecting circuit 7, the exclusive OR circuit 71 generates the gain error signal from the exclusive OR of D₁ and D₅. The logic circuit consisting of the flip-flop 72, AND circuits 73, 74, inverter 75 and OR circuit 76 selects and outputs the gain error signal to the integrator with the operations similar to that of the circuits 32, 36 in the error signal selecting circuit 3 on the basis of the output of logic circuit 31 in the error signal selecting circuit 3 and the decision condition signal from the monitoring circuit 4. The integrator 8 integrates the gain error signal and outputs it to the variable gain amplifier as the gain control signal. Thereby, gain control can be executed in accordance with the decision condition.

Where the drift of a multi-level signal is comparatively small, the error signals of signals in each decision level are integrated and then added to the demodulated signal. When it is detected that the drift becomes large by monitoring the decision condition, the integrated output obtained by selecting the error signal which occurs with the signal in the specified range (including at least the signals higher than the most significant bit or lower than the least significant bit) is added to the demodulated signal. Thereby, pseudo pulling can be prevented.

The many features and advantages of the present invention are apparent from the detailed specification and it is intended by the appended claims to cover all such features and advantages of the system which fall within the scope of the invention. Further, since numerous modifications and changes will readily occur to those skilled in the art, it is not desired to limit the invention to the exact construction and operation shown and described, and accordingly all suitable modifications and equivalents that may be resorted to, fall within the scope of the invention.

## Claims

1. An automatic drift control circuit comprising:
adding means (1) for adding a drift control signal to a multi-level input signal;
A/D converting means (2), operatively connected to said adding means (1), for converting said added multi-level signal into a corresponding digital signal including data bits and a further bit which is lower in significance by one place than the data bits;
error signal selecting means (3), operatively connected to said A/D converting means (2), and always producing an error signal; and
integrating means (5), operatively connected to said error signal selecting means (3) and adding means (1), for integrating said error signal and applying it to said adding means (1) as said drift control signal;
characterised by:
holding means (32) for storing the value of said further bit when the signal level is in a specified range at least including a range higher than the highest decision level of said A/D converting means (2) and a range lower than the lowest decision level thereof, said selecting means (3) being operable in response to a decision condition signal to output said error signal on the basis of the current value of the further bit in a normal condition and on the basis of the stored value in an abnormal condition; and
monitoring means (4), operatively connected to said A/D converting means and said error signal selecting means (3), for judging the decision condition on the basis of said digital signal and outputting said decision condition signal to said error signal selection means (3).

2. An automatic drift control circuit according to claim 1, wherein;
said multi-level input signal is a 16-level signal and said A/D converting means (2) outputs four data bits and two bits of lower significance than said four bits data;
said error signal selecting means (3) comprises a logic circuit (31) which detects that said digital signal level is in the range higher than the highest decision level, the range lower than the lowest decision level or a level between two center decision levels, such holding means comprises a flip-flop (32) which holds the 5th bit of said A/D converting means (2) during said detection, and the selecting means (3) further comprises logic circuits (33, 34, 35, 36) which selectively output the current 5th bit and the signal held by said flip-flop (32) in accordance with said decision condition signal; and
said monitoring means (4) comprises an exclusive NOR circuit (4) which obtains exclusive NOR of the 5th and 6th bits of said A/D converting means (2), an integrator (42) which integrates said exclusive NOR outputs and a comparator (43) which compares said integrator output with the reference value (V_{ref}) and ouputs the comparison result as the decision condition signal.

3. An automatic drift control circuit according to claim 2 further comprising;
a variable gain amplifier (6) which amplifies said 16-level signal on the basis of a gain control signal and outputs such signal to said adding means;
a gain error signal selecting circuit (7) consisting of a flip-flop (72) which holds said gain error signal based on the output from the logic circuit (31) and a further logic circuit (73, 74, 75, 76) which selectively outputs the current gain error signal or the gain error signal held in said flip-flop (72) on the basis of the decision condition signal sent from said monitoring circuit (4); and
an integrator (8) which integrates the gain error signal from said gain error signal selecting circuit (7) and applies this signal to said variable gain amplifier (6) as said gain control signal.

## Patentansprüche

1. Automatische Driftsteuerschaltung, enthaltend:
eine Addiereinrichtung (1), um ein Driftsteuersignal zu einem Mehrpegel-Eingangssignal zu addieren;
eine betriebsmäßig mit der Addiereinrichtung (1) verbundene A/D-Wandlereinrichtung (2), um das addierte Mehrpegelsignal in ein entsprechendes Digitalsignal umzuwandeln, das Datenbits und ein weiteres Bit aufweist, welches um eine Stelle geringwertiger als die Datenbits ist;
eine betriebsmäßig mit der A/D-Wandlereinrichtung (2) verbundene Fehlersignal-Auswahleinrichtung (3), die immer ein Fehlersignal erzeugt; und
eine betriebsmäßig mit der Fehlersignal-Auswahleinrichtung (3) und der Addiereinrichtung (1) verbundene Integriereinrichtung (5), um das Fehlersignal zu integrieren und es als Driftsteuersignal an die Addiereinrichtung (1) anzulegen;
gekennzeichnet durch:
eine Halteeinrichtung (32), um den Wert des weiteren Bit zu speichern, wenn der Signalpegel in einem spezifizierten Bereich liegt, der wenigstens einen Bereich, der höher als der höchste Entscheidungspegel der A/D-Wandlereinrichtung (2) ist, und einen Bereich, der niedriger als ihr niedrigster Entscheidungspegel ist, umfaßt, wobei die Auswahleinrichtung (3) ansprechend auf ein Entscheidungszustandssignal betreibbar ist, um das Fehlersignal auf der Grundlage des gegenwärtigen Werts des weiteren Bits in einem normalen Zustand und auf der Grundlage des gespeicherten Werts in einem anomalen Zustand auszugehen; und
eine betriebsmäßig mit der A/D-Wandlereinrichtung und der Fehlersignal-Auswahleinrichtung (3) verbundene Überwachungseinrichtung (4), um den Entscheidungszustand auf der Grundlage des Digitalsignals zu beurteilen und das Entscheidungszustandssignal an die Fehlersignal-Auswahleinrichtung (3) auszugeben.

2. Automatische Driftsteuerschaltung nach Anspruch 1,
dadurch gekennzeichnet, daß
das Mehrpegel-Eingangssignal ein 16-Pegel-Signal ist und die A/D-Wandlereinrichtung (2) vier Datenbits und zwei Bits von geringerer Wertigkeit als die vier Datenbits ausgibt;
die Fehlersignal-Auswahleinrichtung (3) eine Logikschaltung (31) aufweist, welche nachweist, daß sich der Digitalsignalpegel in dem Bereich, der höher als der höchste Entscheidungspegel liegt, dem Bereich, der niedriger als der niedrigste Entscheidungspegel liegt, oder einem Pegel zwischen zwei Mittelentscheidungspegeln befindet, wobei die derartige Halteeinrichtung ein Flip-Flop (32) aufweist, welches das fünfte Bit der A/D-Wandlereinrichtung (2) während des Nachweises festhält, und wobei die Auswahleinrichtung (3) weiterhin Logikschaltungen (33, 34, 35, 36) aufweist, welche das gegenwärtige fünfte Bit und das mittels des Flip-Flop (32) festgehaltene Signal gemäß des Entscheidungszustandssignals wahlweise ausgeben; und
die Überwachungseinrichtung (4) eine Exklusiv-NICHT-ODER-Schaltung (4), welche ein exklusives NICHT-ODER des fünften und des sechsten Bits der A/D-Wandlereinrichtung (2) erhält, einen Integrierer (42), welcher die exklusiven NICHT-ODER-Ausgangssignale integriert, und einen Vergleicher (43) aufweist, welcher das Ausgangssignal des Integrierers mit dem Referenzwert (V_{ref}) vergleicht und das Vergleichsergebnis als Entscheidungszustandssignal ausgibt.

3. Automatische Driftsteuerschaltung nach Anspruch 2, die weiterhin aufweist:
einen Verstärker (6) mit veränderlicher Verstärkung, welcher das 16-Pegel-Signal auf der Grundlage eines Verstärkungssteuersignals verstärkt und das derartige Signal an die Addiereinrichtung ausgibt;
eine Verstärkungsfehlersignal-Auswahlschaltung (7), die aus einem Flip-Flop (72), welcher das Verstärkungsfehlersignal auf der Grundlage des Ausgangssignals aus der Logikschaltung (31) festhält, und einer weiteren Logikschaltung (73, 74, 75, 76), welche das gegenwärtige Verstärkungsfehlersignal oder das im Flip-Flop (72) festgehaltene Verstärkungsfehlersignal auf der Grundlage des von der überwachungsschaltung (4) gesendeten Entscheidungszustandssignals wahlweise ausgibt, besteht; und
einen Integrierer (8), welcher das Verstärkungsfehlersignal aus der Verstärkungsfehlersignal-Auswahlschaltung (7) integriert und dieses Signal als Verstärkungssteuersignal an den Verstärker (6) mit veränderlicher Verstärkung anlegt.

## Revendications

1. Circuit de contrôle de dérive automatique comprenant:
un dispositif d'addition (1) pour additionner un signal de contrôle de dérive à un signal d'entrée multi-niveaux;
un dispositif de conversion analogique/numérique (2), relié fonctionnellement audit dispositif d'addition (1), pour convertir ledit signal multi-niveaux additionné, en un signal numérique correspondant qui comportent des bits de données et un autre bit qui a un poids d'un rang plus faible que les bits de données;
un dispositif de sélection du signal d'erreur (3), relié fonctionnellement audit dispositif de conversion analogique/numérique (2), et produisant toujours un signal d'erreur; et
un dispositif d'intégration (5), relié fonctionnellement audit dispositif de sélection de signal d'erreur (3) et au dispositif d'addition (1), pour intégrer ledit signal d'erreur et l'appliquer audit dispositif d'addition (1) comme signal de contrôle de dérive;
caractérisé par:
un dispositif de maintien (32) pour stocker la valeur dudit autre bit lorsque le niveau du signal est dans une plage spécifiée comportant au moins une plage plus haute que le plus haut niveau de détermination dudit dispositif de conversion analogique/numérique (2) et une plage plus basse que le plus bas niveau de détermination de celui-ci, ledit dispositif de sélection (3) pouvant être utilisé en réponse à un signal d'état de détermination pour fournir ledit signal d'erreur sur la base de la valeur courante de l'autre bit dans un état normal et sur la base de la valeur stockée dans un état anormal; et
un dispositif de contrôle (4), relié fonctionnellement audit dispositif de conversion analogique/numérique et audit dispositif de sélection du signal d'erreur (3), pour juger l'état de détermination sur la base dudit signal numérique et pour délivrer ledit signal d'état de détermination audit dispositif de sélection du signal d'erreur (3).

2. Circuit de contrôle automatique de dérive selon la revendication 1, dans lequel:
ledit signal d'entrée multi-niveaux est un signal à 16 niveaux et ledit dispositif de conversion analogique/numérique (2) délivre quatre bits de données et deux bits de poids plus faible que lesdits quatre bits de données;
ledit dispositif de sélection du signal d'erreur (3) comprend un circuit logique (31) qui détecte que ledit niveau du signal numérique est dans la plage plus haute que le plus haut niveau de détermination, la plage plus basse que le plus bas niveau de détermination ou à un niveau entre les deux niveaux de détermination au centre, ce dispositif de maintien comprend une bascule (32) qui maintient le cinquième bit dudit dispositif de conversion analogique/numérique (2) pendant ladite détection, et ledit dispositif de sélection (3) comprend en outre des circuits logiques (33, 34, 35, 36) qui délivrent sélectivement le cinquième bit courant et le signal maintenu par ladite bascule (32) selon ledit signal d'état de détermination; et
ledit dispositif de contrôle (4) comprend un circuit OU inversé exclusif (4) qui contient le OU inversé exclusif des cinquième et sixième bits dudit dispositif de conversion analogique/numérique (2), un intégrateur (42) qui intègre lesdites sorties OU inversé exclusif et un comparateur (43) qui compare ladite sortie de l'intégrateur avec la valeur de référence (Vref) et délivre le résultat de la comparaison comme signal de d'état de détermination.

3. Circuit de contrôle automatique de dérive selon la revendication 2 comprenant en outre:
un amplificateur à gain variable (6) qui amplifie ledit signal à 16 niveaux sur la base du signal de contrôle du gain et délivre ce signal audit dispositif d'addition;
un circuit de sélection du signal d'erreur de gain (7) comportant une bascule (72) qui maintient ledit signal d'erreur de gain basé sur le signal de sortie dudit circuit logique (31) et un autre circuit logique (73, 74, 75, 76) qui délivre sélectivement le signal d'erreur du gain courant ou le signal d'erreur du gain maintenu dans ladite bascule (72) sur la base du signal d'état de détermination envoyé par ledit circuit de contrôle (4); et
un intégrateur (8) qui intègre le signal d'erreur du gain à l'aide dudit circuit de sélection de signal d'erreur du gain (7) et applique ce signal audit amplificateur à gain variable (6) comme signal de contrôle du gain.
